# EUROPÄISCHE PATENTSCHRIFT

(11) **EP 0 585 438 B1**
(45) Veröffentlichungstag und Bekanntmachung des Hinweises auf die Patenterteilung: **12.08.1998**
(21) Anmeldenummer: 93906427.5
(22) Anmeldetag: 08.03.1993
(51) Int. Cl.: G06F 3/12

(54) **PARALLELE SCHNITTSTELLE ZUM VERBINDEN VON DATENVERARBEITUNGSGERÄTEN**
PARALLEL INTERFACE FOR CONNECTING DATA PROCESSING MACHINES
INTERFACE PARALLELE POUR RACCORDER DES ORDINATEURS

(30) Priorität: 10.03.1992 DE 4207573
(43) Veröffentlichungstag der Anmeldung: 09.03.1994
(73) Patentinhaber: Siemens Nixdorf Informationssysteme Aktiengesellschaft, 33102 Paderborn (DE)
(72) Erfinder: OPPAT, Jörg, D-13467 Berlin (DE)
(74) Vertreter: Epping, Wilhelm, Dr.-Ing.
(86) Internationale Anmeldenummer: DE9300209
(87) Internationale Veröffentlichungsnummer: WO9318449

(56) Entgegenhaltungen:
- EP-A- 0 506 594
- IBM TECHNICAL DISCLOSURE BULLETIN Bd. 26, Nr. 11, April 1984, NEW YORK US Seiten 5783 - 5784 HSIEH ET AL. 'Printer Interface'
- IBM TECHNICAL DISCLOSURE BULLETIN Bd. 33, Nr. 3B, August 1990, NEW YORK US Seiten 88 - 89 'Query Printer Status'
- ELECTRONICS WORLD AND WIRELESS WORLD Bd. 95, Nr. 1645, November 1989, SURREY GB Seiten 1089 - 1092 M. HALE 'Contriving parallel I/O on the IBM PC'

## Beschreibung

Die Erfindung betrifft eine parallele Schnittstelle zum Verbinden von Datenverarbeitungsgeräten untereinander oder mit Peripheriegeräten, insbesondere eines Personal Computers mit einem Drucker, mit mindestens zwei Zustandsinformationsleitungen, abschaltbaren Leitungstreibern und Steuerleitungen, wobei auf einer ersten Steuerleitung für eine vorgegebene Datenübertragungsrichtung der Beginn der Datenübertragung seitens des sendenden Geräts und auf einer zweiten Steuerleitung das Ende der Datenübertragung seitens des empfangenden Geräts signalisiert wird.

Zur Ankopplung von Peripheriegeräten wird bei einem Personal Computer in der Regel eine serielle Schnittstelle zur Datenkommunikation und eine parallele Schnittstelle für den Anschluß eines Druckers bereitgestellt. Die serielle Schnittstelle ist gleichzeitig sowohl zur Ausgabe als auch zur Eingabe verwendbar, aber in ihrer Geschwindigkeit auf etwa 2 kByte/s beschränkt, da die Daten bitweise übertragen werden. Die parallele Schnittstelle kann durch acht parallel benutzbare Datenleitungen und zusätzliche Steuerleitungen eine Ausgabegeschwindigkeit von etwa 100 kByte/s erreichen. Eingabe vom Peripheriegerät zum Rechner ist jedoch nicht möglich; es können nur elementare Zustandsinformationen durch dedizierte Signalleitungen, nämlich Betriebsbereitschaft ("selected"), Papierende ("paper end") und Fehler ("error") übertragen werden.

Drucker werden heutzutage mit eigenen Rechnern ausgestattet und können umfangreiche Test-, Diagnose- und Statusinformation zurücksenden, wenn sie über eine geeignete Schnittstelle betrieben werden. Dies gilt insbesondere für Drucker, bei denen die zu druckende Information über die Seitenbeschreibungssprache POSTSCRIPT™ codiert wird, in der diese Rückinformation ausdrücklich Teil der Sprache ist. Hierzu müssen solche Drucker bisher über die serielle Schnittstelle angeschlossen werden. In vielen Fällen ist zwar ein Verzicht auf den Rückkanal möglich, um die größere Geschwindigkeit der parallelen Schnittstelle nutzen zu können. Jedoch sind Fälle bekannt, in denen auf einen Rückkanal nicht verzichtet und somit die parallele Schnittstelle nicht benutzt werden kann, beispielsweise ein Sparbuchdrucker, der von dem zu bedruckenden Sparbuch vor dem Druck eine magnetische Codierung des Sparbuchs lesen und an das Datenverarbeitungsgerät rückübertragen muß. Es sind auch schnelle parallele und bidirektionale Schnittstellen bekannt. Ihr Einsatz scheitert jedoch häufig an den dafür notwendigen hohen Zusatzkosten für Hardware und Software.

In der europäischen Patentanmeldung EP-A-0 506 594 (Stand der Technik gemäß Artikel 54(3) und (4) EPÜ) wird eine bidirektionale Schnittstelle angegeben, die je eine Zustandsinformations- und Steuerleitung in jeder Richtung der Datenübertragung verwendet.

In dem Artikel "Contrieving parallel I/O on the IBM PC" von Mike Hale in Electronics World + Wireless World, 95 (1989) November, S.1089ff, wird die Verwendung einer parallelen Schnittstelle zur Eingabe, insbesondere mittels zusätzlicher Bauelemente, dargestellt.

Aufgabe der Erfindung ist es, eine parallele Schnittstelle so zu gestalten und zu betreiben, daß die bisherige Funktion als Druckerschnittstelle erhalten bleibt und dieselbe Schnittstelle für erweiterte Drucker oder andere Peripheriegeräte bidirektional und mit gleich hoher Geschwindigkeit in beiden Richtungen betrieben werden kann.

Die Erfindung löst die Aufgabe bei einer parallelen Schnittstelle eingangs genannter Art in einer ersten Lösungsvariante dadurch, daß die beiden Zustandsinformationsleitungen zum Abschalten der Leitungstreiber des jeweils empfangenden Geräts dienen, um die Datenübertragungsrichtung umzuschalten, daß nach Umschalten der Datenübertragungsrichtung die zweite Steuerleitung seitens des dann sendenden Geräts in gleicher Weise wie die erste vor dem Umschalten und die erste Steuerleitung seitens des dann empfangenden Geräts in gleicher Weise wie die zweite vor dem Umschalten verwendet wird, mit einer über eine "open collector"-Stufe angeschlossenen ersten Steuerleitung, wobei auf der ersten Steuerleitung das nach dem Umschalten sendende Gerät zusätzlich den Beginn seiner Datenübertragung signalisieren ebenfalls hier einfügen.

Die Erfindung beruht auf der Erkenntnis, daß Steuer- und Zustandsinformationsleitungen nicht mehr in ihrer ursprünglich definierten Form verwendet werden müssen und daher zusammen mit einer Doppelfunktion existierender Leitungen zur Lösung der Aufgabe benutzt werden können.

Es gelingt damit, Peripheriegeräte, die hohe Datenübertragungsgeschwindigkeit und eine Rückübertragung benötigen, an eine parallele Schnittstelle anzuschließen, wobei über dieselbe Schnittstelle alle bisherigen Formen von Ausgaben weiterverwendet werden können. Insbesondere ist eine Schnittstelle nach der Erfindung geeignet, einen schnellen Datenaustausch in beiden Richtungen zwischen zwei Datenverarbeitungsgeräten durchzuführen, ohne daß hierzu Hardware-Zusätze notwendig sind. Die Software ist für beide zu verbindende Geräte gleichartig.

Bei Schnittstellen der hier betrachteten Art ist auf beiden Seiten beispielsweise eine Unterbrechungssteuerung vorgesehen, so daß impulsförmige Signale zur Signalisierung von Beginn und Ende der Datenübertragung verwendet werden können. Das impulsförmige Endesignal wurde bisher für den Betrieb eines Druckers vorgesehen, weil Drucker sehr langsam waren und der Rechner, während er auf die Übertragung des nächsten Zeichens wartete, andere Aufgaben erfüllen konnte. Das impulsförmige Anfangssignal wurde vorzugsweise dazu genutzt, die Daten in ein Hardware-Register einzuspeichern, wo sie dann durch fest verdrahtete Logik dem Druck zugeführt wurden. Die Erfindung beruht nun gerade auf der Überlegung, daß beide Signale äquivalente Funktion haben, wenn man als zu verbindende Geräte nicht Drucker und Rechner, sondern allgemein Geräte mit Datenverarbeitungsfunktion voraussetzt.

Durch die mit einer über eine "open collector"-Stufe angeschlossenen ersten Steuerleitung, wobei auf der ersten Steuerleitung das nach dem Umschalten sendende Gerät zusätzlich den Beginn seiner Datenübertragung signalisieren kann, wird erreicht, daß bei fehlender oder vorübergehend deaktivierter Unterbrechungssteuerung eines der beiden verbundenen Geräte durch einfaches Abfragen des Signals auf der ersten Steuerleitung feststellen kann, daß das andere Gerät die Datenübertragung begonnen hat.

Die zweite Lösungsvariante der Erfindung zeichnet sich bei einer parallelen Schnittstelle eingangs genannter Art dadurch aus, daß die beiden Zustandsinformationsleitungen zum Abschalten der Leitungstreiber des jeweils empfangenden Geräts dienen, um die Datenübertragungsrichtung umzuschalten, und daß nach Umschalten der Datenübertragungsrichtung die zweite Steuerleitung seitens des dann sendenden Geräts in gleicher Weise wie die erste vor dem Umschalten verwendet wird und auf der ersten, über eine "open collector"-Stufe angeschlossenen Steuerleitung seitens des dann sendenden Geräts während seiner Datenübertragung ein Signal abgegeben wird, das zusammen mit der zweiten Steuerleitung den Beginn der Datenübertragung kennzeichnet.

Dieser Lösungsweg beruht auf derselben Erkenntnis wie der erste, verwendet aber eine Steuerleitung bidirektional und für die Eingaberichtung zusätzliche statische Signalisierung des Übertragungsbegins. Dadurch ist die Lösung nicht mehr symmetrisch, so daß im Gegensatz zur ersten Lösung die Software auf beiden Geräten unterschiedliche sein muß. Sie stellt aber durch das statische Signal geringere Anforderungen an ebendiese Software.

Für solche Schnittstellen, bei denen mindestens zwei weitere Steuerleitungen vorgesehen sind, wobei auf der dritten Steuerleitung bei der vorgegebenen Datenübertragungsrichtung seitens des empfangenden Geräts die Dauer der Datenübertragung signalisiert wird, können beide Lösungsvarianten der Erfindung vorteilhaft derart weiter ausgebildet sein, daß nach Umschalten der Datenübertragungsrichtung das dann empfangende Gerät mittels der vierten Steuerleitung in gleicher Weise wie mittels der dritten Steuerleitung vor dem Umschalten die Dauer der Datenübertragung signalisiert.

Zusätzlich zu den impulsförmigen Signalen gibt es nämlich ein Signal, das den Zustand "in Verarbeitung befindlich" (BUSY), der schon aus den dynamischen Signalen abgeleitet werden kann, statisch signalisiert. Diese Technik hat sich praktisch bewährt und wird daher mit einer ansonsten faktisch unbenutzten Singalleitung für die Rückrichtung analog ausgebildet.

Im folgenden wird an Hand der Zeichung erläutert, wie die Erfindung praktisch durchgeführt werden kann. Es wird dabei beispielhaft davon ausgegangen, daß ein Rechner mit einem multifunktionalen Drucker verbunden ist.

Fig. 1 ist ein Blockdiagramm der beteiligten Gerätekonfiguration.

Fig. 2 ist ein Blockdiagramm der verwendeten parallele Schnittstelle.

Fig. 3 ist ein Flußdiagramm, mit dem die notwendigen Abläufe seitens des Rechners dargestellt werden.

Fig. 4, Fig. 5 und Fig. 6 sind Darstellungen der Signalverläufe auf den Übertragungsleitungen für verschiedene Fälle.

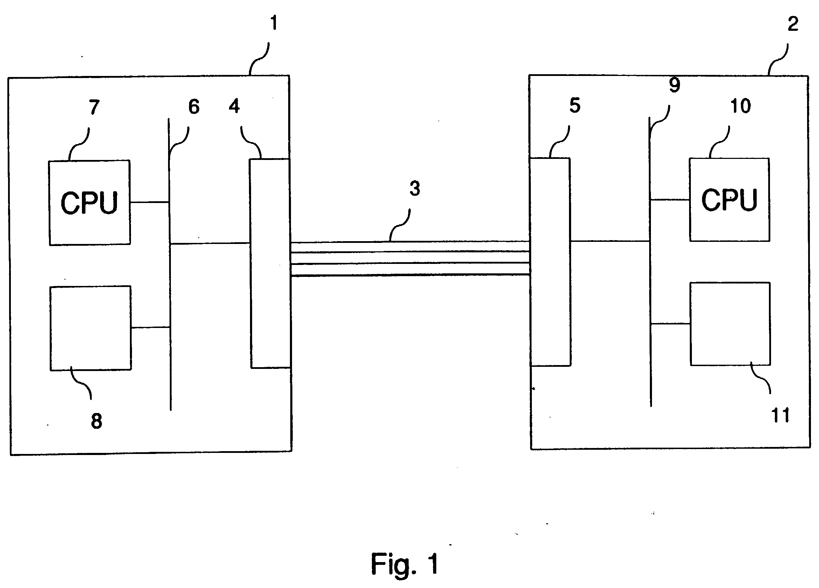

In Fig. 1 ist eine typische Anordnung dargestellt, in der ein Rechner 1 mit einem Drucker 2 über ein Kabel 3 verbunden ist. Das Kabel 3 stellt die Verbindung zwischen Schnittstellen 4 und 5 her, die sehr ähnlich zueinander sind und im Fall der hier beschriebenen Erfindung sogar gleich sein können.

Der innere Aufbau des Rechners 1 ist durch einen Daten- und Adressen-Bus 6, eine Zentraleinheit 7 und weitere Komponenten 8 dargestellt, wobei die Komponente 8 beispielsweise Tastatur und Bildschirm für den Benutzer sein kann; ähnlich wird davon ausgegangen, daß der Drucker entsprechend dem Stand der Technik einen Mikroprozessor 10 enthält, der über einen Bus 9 mit der Schnittstelle 5 und weiteren Komponenten 11 verbunden ist, wobei beispielsweise die Komponente 11 das Papier tatsächlich bedruckt.

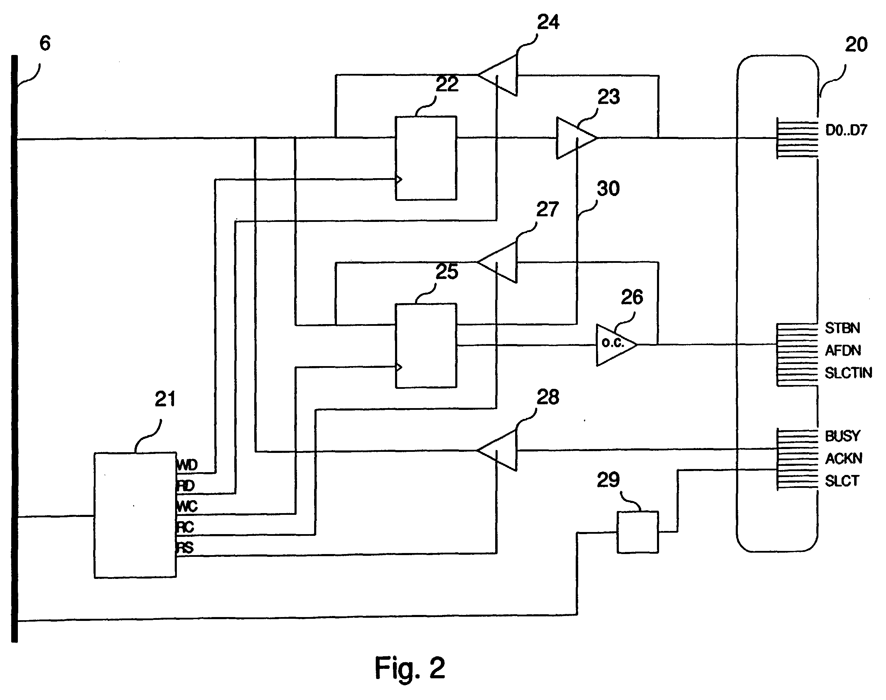

In Fig. 2 ist die Schnittstelle 4 genauer dargestellt. Dabei ist eine vereinfachte Darstellung gewählt, bei der eine Leitung beziehungsweie ein Funktionsblock für mehrere gleichartige Elemente steht, wie die Vielfachdarstellung im rechten Teil der Figur andeutet. Die Schnittstelle enthält einen Steckverbinder 20, an dem das Kabel 3 angeschlossen wird, und wird über den Bus 6 mit Daten, Adressinformation und sonstigen Statussignalen versorgt. Eine Dekodiereinrichtung 21 erzeugt entsprechend dem für den Bus 6 vereinbarten Protokoll Signale WD, RD, WC, RC und RS zum Aktivieren der weiteren Bausteine, hier eines Datenspeichers 22, der mit dem Signal WD ein auszugebendes Byte jeweils zwischenspeichert und über einen Leitungstreiber 23 an den Stecker 4 bzw. an acht Datenleitungen D0 bis D7 weiterleitet. Für die Rückübertragung vom Drucker 2 ist ein Bustreiber 24 vorgesehen, der von der Dekodiereinheit 21 durch das Signal RD gegebenenfalls aktiviert wird. Ähnliche Verhältnisse liegen für die Ausgabe von Steuersignalen STBN, AFDN und SLCTIN an den Drucker 2 vor; hierbei werden die Steuersignale in einem Speicher 25 festgehalten und über einen Leitungstreiber 26 auf das Kabel 3 geschaltet. Der Leitungstreiber 26 ist ein Treiber mit offenem Kollektor; die hierbei notwendigen Lastwiderstände sind nicht eingezeichnet. Zur Rückübertragung dient ein Bustreiber 27, mit dem die vom Drucker 2 ausgegebenen Signale durch das Signal RC wieder eingelesen werden können. Obwohl die beiden Bustreiber 24 und 27 für die Ausgabe funktion der Schnittstelle 4 nicht benötigt werden und von normaler Anwendersoftware nicht benutzt werden, sind sie sehr nützlich, um die Schnittstelle gegen Kurzschluß auf den Ausgangsleitungen zu überprüfen. Für die Übernahme von Statussignalen BUSY, ACKN und SLCT vom Drucker 2 dient ein Bustreiber 28, der durch das Signal RS aktiviert wird. Mit einem Funktionsblock 29 ist eine Unterbrechungssteuerung angedeutet, die bei einem Impuls auf der ACKN-Leitung eine Unterbrechungsanforderung auf dem Bus 6 erzeugen kann.

Wichtig für die Funktion der Schnittstelle ist die Verbindung 30 von dem Speicher 25 zum Leitungstreiber 23, durch die der Leitungstreiber 23 abgeschaltet werden kann. Der Speicher 25 wird hierzu um ein Bit breiter als für den Leitungstreiber 26 ausgelegt. Dieses zusätzliche Bit, üblicherweise das fünfte Bit, steuert direkt den Leitungstreiber 23 und erlaubt so eine bidirektionale Nutzung der acht Datenleitungen D0 bis D7. Es ist allerdings keine weitere Hardware vorhanden, die eine Abwicklung der Datenübertragung durch die Schnittstelle 4 steuert oder unterstützt; dies erfolgt durch Software im Rechner 1 und Drucker 2.

Die Definition der in Fig. 2 dargestellten Schnittstellensignale für reinen Ausgabe-Druckerbetrieb lautet:

| Name | Typ | Funktion |
|---|---|---|
| D0..D7 | Output | Datenleitungen |
| STBN | Output | Datenübernahme (Strobe) |
| BUSY | Input | Belegt |
| ACKN | Input | Quittung |
| SLCTIN | Output | Aktivierung |
| SLCT | Input | Betriebsbereit |
| AFDN | Output | Autofeed |

Die Datenleitungen D0..D7 und die Steuerleitungen BUSY, STBN und ACKN dienen der Koordination der Datenübermittlung.

Das Signal SLCT signalisiert die generelle Betriebsbereitschaft des Peripheriegeräts. SLCTIN deaktiviert das Gerät, so daß nachfolgende Datenübermittlungen ignoriert werden. Diese Funktion wurde für Anwendungen bei serieller Übertragung entwickelt, bei denen der Drucker denselben Datenstrom empfängt wie Datensichtstation und nur ausgewählte Teile ausdrucken soll, und als Funktion für die parallele Ansteuerung übernommen. Sie wird jedoch nicht mehr aktiv ausgenutzt, d.h., zur Deaktivierung benutzt; viele Drucker ignorieren dieses Signal. Jedoch ist es möglich, daß Programme zur Sicherheit den Drucker über dieses Signal aktivieren; eine erweiterte Verwendung im Sinne der Erfindung muß daher so gestaltet sein, daß hierdurch keine Störungen entstehen können.

Gleichfalls unbenutzt ist das AFDN-Signal, das die Funktion des Zeichens "CR" (Code 13) dahingehend ändert, daß zusätzlich ein Zeilenvorschub erzeugt wird. Auch dieses Signal wird praktisch nicht mehr verwendet und von vielen Druckern nicht mehr unterstützt.

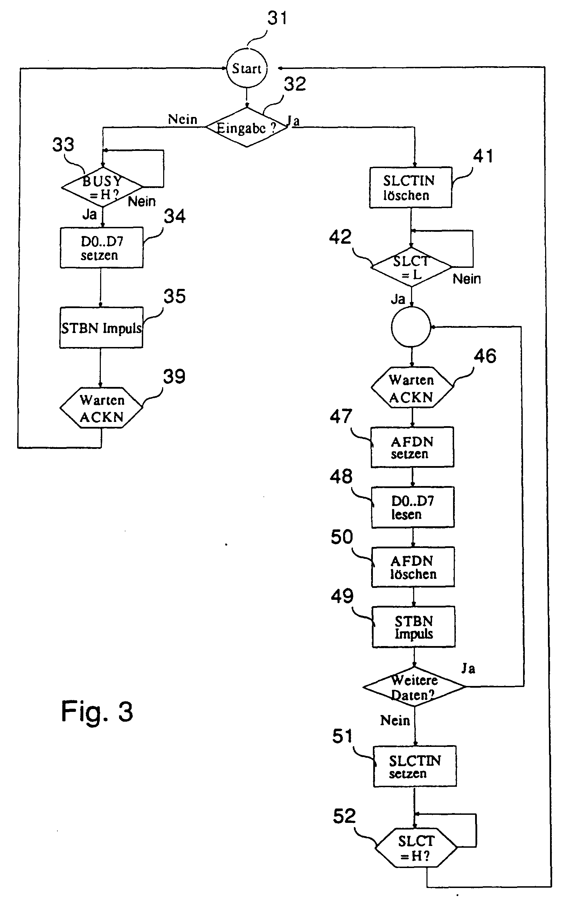

In Fig. 3 ist ein Flußdiagramm dargestellt, das der Programmierung des Rechners entspricht. Die Programmierung des Druckers ist ähnlich und ergibt sich aus den Signalverläufen auf der Schnittstelle.

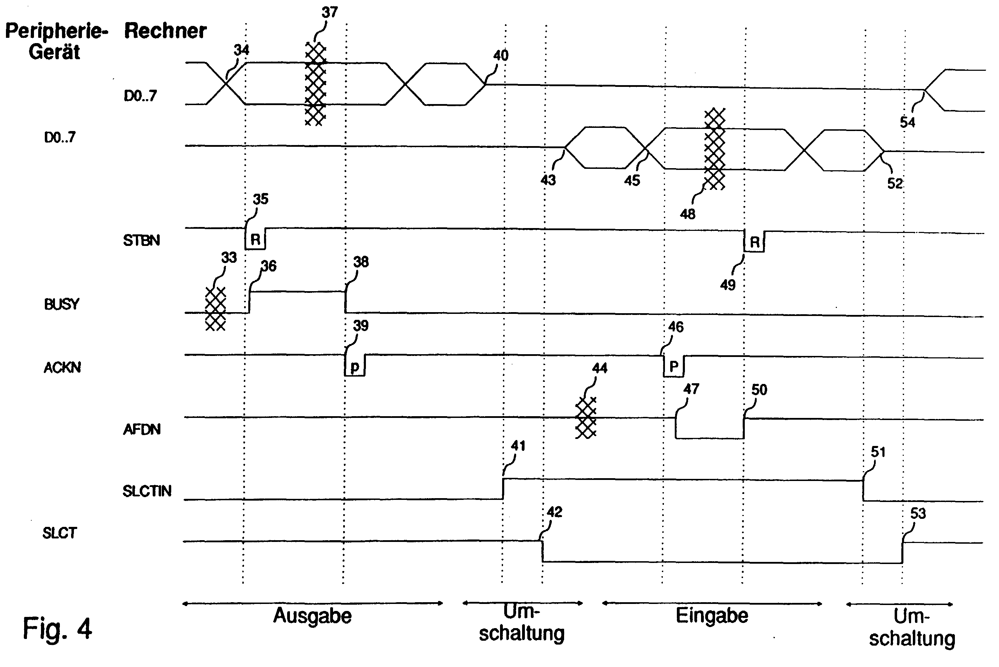

In Fig. 4 ist der Signalverlauf auf den Verbindungsleitungen zwischen Rechner und Drucker beispielhaft für die Ausgabe eines Bytes mit sofort anschließender Eingabe dargestellt. Fehlerbehandlung ist nicht ausgeführt und wird nach üblichem Vorgehen hinzugefügt. Fig. 4 enthält Bezugszeichen, die den in Fig. 3 gezeigten Schritten entsprechen und zusätzlich Funktionsschritte des Druckers angeben.

Die Ausgabe beginnt mit dem Startschritt 31 im Rechner. Es wird, wie in der Praxis üblich, davon ausgegangen, daß die notwendigen Initialisierungen bereits durchgeführt wurden und z.B. das Signal SLCTIN aktiviert und die Leitungstreiber 23 angeschaltet sind. Die erfindungsgemäße Benutzung hinterläßt die Schnittstelle nach einer Rücknachricht in diesem Zustand.

Nach der Entscheidung 32, daß eine Ausgabe zu tätigen ist, prüft der Rechner im Schritt 33 das Signal BUSY, um sicherzustellen, daß der Drucker empfangsbereit ist. Dies ist normalerweise der Fall, so daß der Rechner im Schritt 34 das Ausgabebyte auf die Datenleitungen D0 bis D7 legen kann. Daran anschließend erzeugt er in Schritt 35 einen Impuls auf der Leitung STBN. Der Buchstabe R in Fig. 4 deutet an, daß der Impuls vom Rechner erzeugt wird. Als Reaktion auf den Impuls setzt der Drucker das BUSY-Signal im Schritt 36. Damit sperrt der Drucker logisch die Datenleitungen D0 bis D7, d.h, der Rechner darf bis zur Deaktivierung von BUSY die Signale auf den Datenleitungen D0 bis D7 nicht verändern, was durch den Datenspeicher 22 in der Schnittstelle auch sichergestellt ist. Der Drucker übernimmt im Schritt 37 die Daten auf den Datenleitungen D0 bis D7 und verarbeitet sie. Ist er zum Empfang des nächsten Bytes bereit, so deaktiviert er im Schritt 38 das BUSY-Signal und erzeugt gleichzeitig im Schritt 29 den Impuls P auf der ACKN-Leitung, um über die Unterbrechungssteuerung 29 dem Rechner neue Ausgaben zu ermöglichen, womit die Steuerung in dem in Fig. 3 gezeigten Flußdiagramm zu Schritt 32 zurückgeführt wird.

Der Rechner will im Anschluß an die Ausgabe eine Eingabe durchführen, entscheidet sich also im Schritt 32, den Rückkanal zu benutzen. Er deaktiviert im Schritt 40 als erstes den Leitungstreiber 23 über die Leitung 30. Danach oder gleichzeitig deaktiviert er im Schritt 41 das Signal SLCTIN und fordert damit den Drucker auf, ein Byte zu senden. Der Drucker quittiert die Anfrage durch Deaktivierung von SLCT im Schritt 42 und kann nunmehr im Schritt 43 seine Leitungstreiber aktivieren. Da die AFDN-Leitung die Rolle der BUSY-Leitung in der Gegenrichtung hat, prüft der Drucker im Schritt 44 dieses Signal. Im Normalfall kann der Drucker dann das zu übertragende Byte im Schritt 45 auf die Datenleitungen D0 bis D7 schalten und mit einem Impuls P auf der ACKN-Leitung den Rechner über die Unterbrechungssteuerung 29 im Schritt 46 zur Reaktion veranlassen. Der Rechner quittiert den Impuls, indem er im Schritt 47 das Signal AFDN aktiviert und danach analog zur anderen Richtung im Schritt 48 die Daten übernimmt und verarbeitet. Ist er für die Übernahme weiterer Daten bereit, so signalisiert er im Schritt 49 das Ende der Übertragung durch den Impuls R auf der STBN-Leitung und Rücknahme des AFDN-Signals im Schritt 50.

Im Schritt 51 setzt der Rechner das Signal SLCTIN, um dem Drucker anzuzeigen, daß die Übertragungsrichtung wieder in die Ausgaberichtung umzukehren ist. Der Drucker schaltet daraufhin im Schritt 52 seinen Leitungstreiber ab und quittiert mit einer Aktivierung von SLCT im Schritt 53, woraufhin der Rechner im Schritt 54 wieder seinen Leitungstreiber 23 aktiviert. Damit ist der Signalzustand zum Beginn einer Ausgabe wieder erreicht.

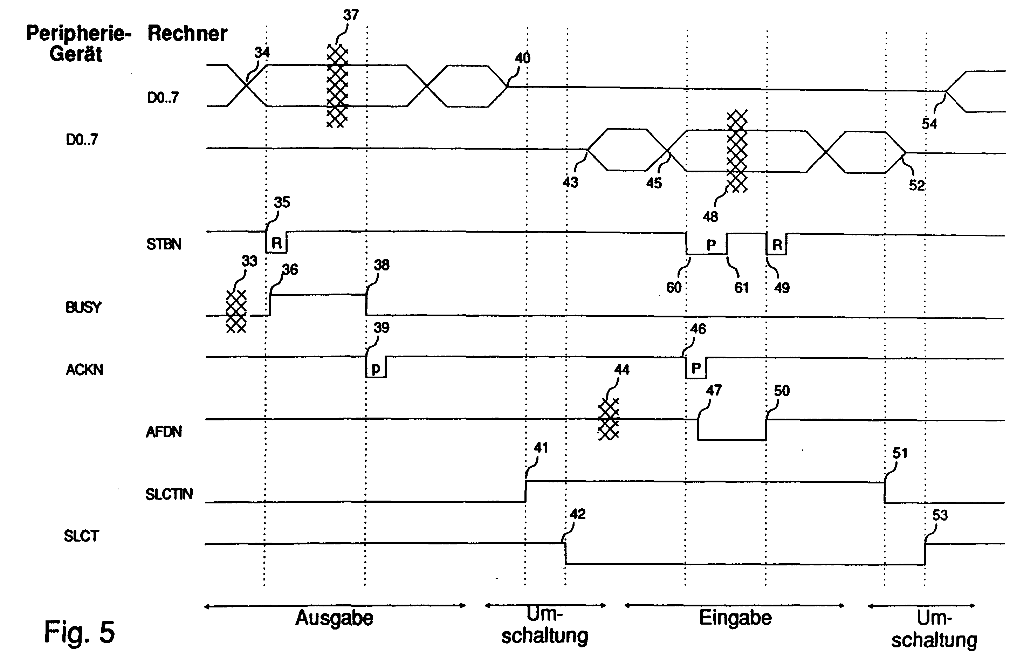

In Fig. 5 ist eine Fortbildung dargestellt, bei der nicht davon ausgegangen werden muß, daß der Rechner das Unterbrechungssignal bei Schritt 46 auf der ACKN-Leitung zuverlässig entdeckt. Daher wird der Beginn der Rückübertragung durch ein statisches Signal angezeigt. Da hierzu keine freie Leitung zur Verfügung steht, wird ausgenutzt, daß die Leitungstreiber 26 sowohl im Rechner als auch im Drucker als "open collector"-Stufen ausgeführt sind, zumindest für das STBN-Signal. Der Verlauf entspricht bis Schritt 46 dem bereits beschriebenen; gleichzeitig mit Schritt 46 aktiviert nun aber der Drucker die STBN-Leitung im Schritt 60; benutzt sie also in einer der ursprünglichen entgegengesetzten Richtung. Mit Schritt 47 quittiert der Rechner, daß er den Beginn der Datenübertragung erkannt hat; danach nimmt der Drucker im Schritt 61 das STBN-Signal zurück und aktiviert ggf. seine eigene Unterbrechungssteuerung. Jetzt kann der Rechner wie zuvor in den Schritten 49 und 50 das Ende der Rückübertragung signalisieren.

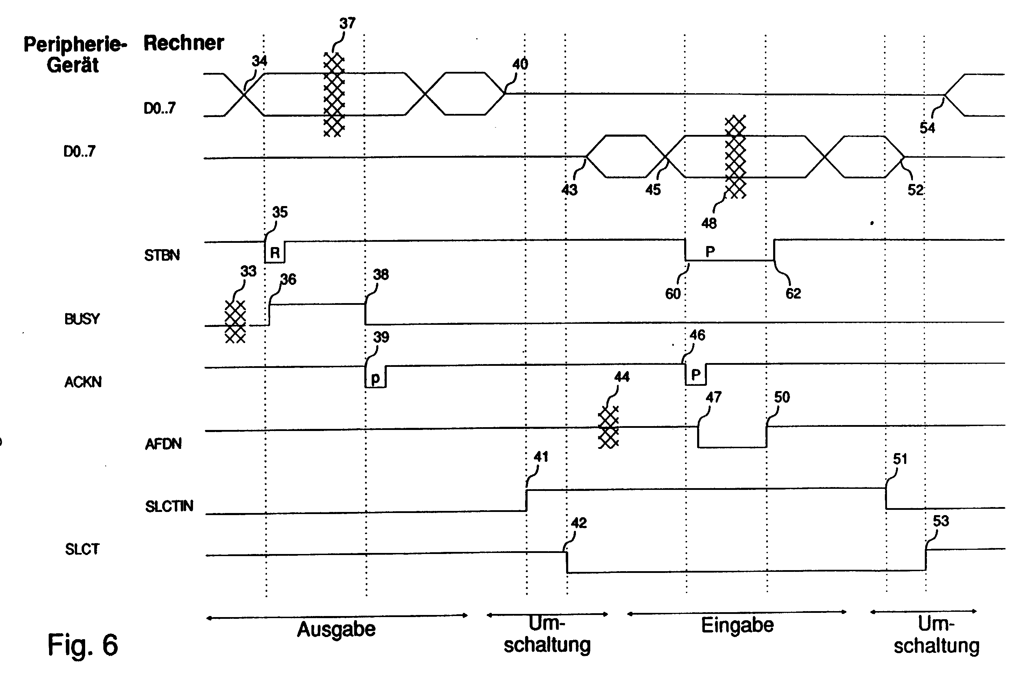

Sofern der Drucker über keine Unterbrechungssteuerung verfügt, aber wie zuvor eine statische Signalisierung des Beginns der Rückübertragung notwendig erscheint, kann die Schnittstelle nach Fig. 6 benutzt werden. Die Schritte entsprechen wieder bis Schritt 46 den in Fig. 4 gezeigten; es folgt wie zuvor mit Schritt 60 die Aktivierung von STBN. Im Unterschied zu Fig. 5 wird aber das Signal STBN nicht nach Schritt 47 zurückgenommen, sondern verbleibt bis zum Ende der Rückübertragung bei 62 im aktiven Zustand und wird demgemäß nach Schritt 50 zurückgenommen.

## Patentansprüche

1. Parallele Schnittstelle zum Verbinden von Datenverarbeitungsgeräten untereinander oder mit Peripheriegeräten, insbesondere eines Personal Computers mit einem Drucker, mit mindestens zwei Zustandsinformationsleitungen, bidirektionalen Leitungstreibern und Steuerleitungen, wobei auf einer ersten Steuerleitung für eine vorgegebene Datenübertragungsrichtung der Beginn der Datenübertragung seitens des sendenden Geräts und auf einer zweiten Steuerleitung das Ende der Datenübertragung seitens des empfangenden Geräts signalisiert wird, die beiden Zustandsinformationsleitungen (SLCT, SLCTIN) zum Abschalten der Leitungstreiber des jeweils empfangenden Geräts dienen, um die Datenübertragungsrichtung umzuschalten, daß nach Umschalten der Datenübertragungsrichtung die zweite Steuerleitung (ACKN) seitens des dann sendenden Geräts in gleicher Weise wie die erste vor dem Umschalten und die erste Steuerleitung (STBN) seitens des dann empfangenden Geräts in gleicher Weise wie die zweite vor dem Umschalten verwendet wird, mit einer über eine "open collector"-Stufe angeschlossenen ersten Steuerleitung, dadurch gekennzeichnet, daß auf der ersten Steuerleitung (STBN) das nach dem Umschalten sendende Gerät zusätzlich den Beginn seiner Datenübertragung signalisiert.

2. Parallele Schnittstelle zum Verbinden von Datenverarbeitungsgeräten untereinander oder mit Peripheriegeräten, insbesondere eines Personal Computers mit einem Drucker, mit mindestens zwei Zustandsinformationsleitungen, abschaltbaren Leitungstreibern und Steuerleitungen, wobei auf einer ersten Steuerleitung für eine vorgegebene Datenübertragungsrichtung der Beginn der Datenübertragung seitens des sendenden Geräts und auf einer zweiten Steuerleitung das Ende der Datenübertragung seitens des empfangenden Geräts signalisiert wird, dadurch gekennzeichnet, daß die beiden Zustandsinformationsleitungen (SLCT, SLCTIN) zum Abschalten der Leitungstreiber des jeweils empfangenden Geräts dienen, um die Datenübertragungsrichtung umzuschalten, und daß nach Umschalten der Datenübertragungsrichtung die zweite Steuerleitung (ACKN) seitens des dann sendenden Geräts in gleicher Weise zur dynamischen Signalisierung wie die erste vor dem Umschalten verwendet wird und zusätzlich auf der ersten, über eine "open collector"-Stufe angeschlossenen Steuerleitung (STBN) seitens des dann sendenden Geräts während seiner Datenübertragung ein Signal abgegeben wird, das wie auch die zweite Steuerleitung (ACKN) den Beginn der Datenübertragung kennzeichnet.

3. Schnittstelle nach Anspruch 1 oder 2 mit mindestens zwei weiteren Steuerleitungen, wobei auf der dritten Steuerleitung bei der vorgegebenen Datenübertragungsrichtung seitens des empfangenden Geräts die Dauer der Datenübertragung signalisiert wird, dadurch gekennzeichnet, daß nach Umschalten der Datenübertragungsrichtung das dann empfangende Gerät mittels der vierten Steuerleitung (AFDN) in gleicher Weise wie die dritte Steuerleitung (BUSY) vor dem Umschalten die Dauer der Datenübertragung signalisiert.

## Claims

1. Parallel interface for connecting data processing devices to one another or to peripheral devices, particularly a personal computer to a printer, having at least two status information lines, bidirectional line drivers and control lines, the beginning of the data transmission being signalled by the transmitting device on a first control line for a predetermined data transmission direction and the end of the data transmission being signalled by the receiving device on a second control line, the two status information lines (SLCT, SLCTIN) being used for disconnecting the line drivers of the device receiving in each case, in order to change over the direction of data transmission, the second control line (ACKN), after the direction of data transmission has been changed over, being used by the then transmitting device in the same manner as the first one before the change-over and the first control line (STBN) being used by the then receiving device in the same manner as the second one before the change-over, and having a first control line connected via an "open-collector" stage, characterized in that the device transmitting after the change-over additionally signals the beginning of its data transmission on the first control line (STBN).

2. Parallel interface for connecting data processing devices to one another or to peripheral devices, particularly a personal computer to a printer, having at least two status information lines, disconnectable line drivers and control lines, the beginning of the data transmission being signalled by the transmitting device on a first control line for a predetermined data transmission direction and the end of the data transmission being signalled by the receiving device on a second control line, characterized in that the two status information lines (SLCT, SLCTIN) are used for disconnecting the line drivers of the device receiving in each case, in order to change over the direction of data transmission, and in that, after the direction of data transmission has been changed over, the second control line (ACKN) is used by the then transmitting device in the same manner, for dynamic signalling, as the first one before the change-over and additionally on the first control line (STBN), connected via an "open-collector" stage, a signal which, like the second control line (ACKN), identifies the beginning of the data transmission is output by the then transmitting device during its data transmission.

3. Interface according to Claim 1 or 2, having at least two further control lines, the duration of the data transmission being signalled by the receiving device on the third control line given the predetermined direction of data transmission, characterized in that, after the direction of data transmission has been changed over, the then receiving device signals the duration of the data transmission by means of the fourth control line (AFDN) in the same manner as the third control line (BUSY) before the change-over.

## Revendications

1. Interface parallèle pour relier des appareils de traitement de données entre eux ou à des appareils périphériques, notamment pour relier un ordinateur personnel à une imprimante, comprenant au moins deux lignes d'information d'état, des transmetteurs de ligne bidirectionnels et des lignes de commande, le début de la transmission de données étant signalé du côté de l'appareil émetteur sur une première ligne de commande pour un sens de transmission de données prédéterminé et la fin de la transmission de données étant signalée du côté de l'appareil récepteur sur une deuxième ligne de commande, les deux lignes d'information d'état (SLCT, SLCTIN) servant à déconnecter les transmetteurs de ligne de l'appareil justement récepteur afin de commuter le sens de transmission de données, la deuxième ligne de commande (ACKN) du côté de l'appareil alors émetteur, après la commutation du sens de transmission de données, étant utilisée de la même manière que la première avant la commutation et la première ligne de commande (STBN) du côté de l'appareil alors récepteur étant utilisée de la même manière que la deuxième avant la commutation, avec une première ligne de commande raccordée par l'intermédiaire d'un étage à collecteur ouvert, caractérisée par le fait que l'appareil émetteur après la commutation signale en plus sur la première ligne de commande (STBN) le début de sa transmission de données.

2. Interface parallèle pour relier des appareils de traitement de données entre eux ou à des appareils périphériques, notamment pour relier un ordinateur personnel à une imprimante, avec au moins deux lignes d'information d'état, des transmetteurs de ligne pouvant être déconnectés et des lignes de commande, le début de la transmission de données étant signalé du côté de l'appareil émetteur sur une première ligne de commande pour un sens de transmission de données prédéterminé et la fin de la transmission de données étant signalée du côté de l'appareil récepteur sur une deuxième ligne de commande, caractérisée par le fait que les deux lignes d'information d'état (SLCT, SLCTIN) servent à déconnecter les transmetteurs de ligne de l'appareil justement récepteur afin de commuter le sens de transmission de données, la deuxième ligne de commande (ACKN) du côté de l'appareil alors émetteur, après la commutation du sens de transmission de données, est utilisée de la même manière pour la signalisation dynamique que la première avant la commutation et un signal, qui caractérise comme la deuxième ligne de commande (ACKN) le début de la transmission de données, est envoyé en plus sur la première ligne de commande (STBN), raccordée par l'intermédiaire d'un étage à collecteur ouvert, du coté de l'appareil alors émetteur pendant sa transmission de données.

3. Interface parallèle selon la revendication 1 ou 2, avec au moins deux autres lignes de commande, la durée de la transmission de données étant signalée sur la troisième ligne de commande pour le sens de transmission de données prédéterminé du côté de l'appareil récepteur, caractérisée par le fait que, après la commutation du sens de la transmission de données, l'appareil alors récepteur signale au moyen de la quatrième ligne de commande (AFDN), de la même manière que la troisième ligne de commande (BUSY) avant la commutation, la durée de la transmission de données.
